# EUROPÄISCHE PATENTANMELDUNG

(11) **EP 1 975 029 A1**
(43) Veröffentlichungstag der Anmeldung: **01.10.2008**
(21) Anmeldenummer: 08004256.7
(22) Anmeldetag: 07.03.2008
(51) Int. Cl.: B60W 30/14

(54) **Vorrichtung und Verfahren zur automatischen Geschwindigkeitsregelung eines Fahrzeugs**

(30) Priorität: 27.03.2007 DE 102007015303
(71) Anmelder: Astrium GmbH, 81663 München (DE)
(72) Erfinder: Trautenberg, Hans L. Dr., 85521 Ottobrunn (DE)
(74) Vertreter: Hummel, Adam

(57) **Zusammenfassung**

Die Erfindung betrifft eine Vorrichtung (10) zur automatischen Geschwindigkeitsregelung eines Fahrzeugs mit
- einem Ortsbestimmungssensor (12), der ausgebildet ist, ein Positionssignal (14) mit der aktuellen Position des Fahrzeugs abzugeben,
- einer Navigationsdatenbank (16), in der die Positionen von Ortsgrenzen gespeichert sind, und
- einer Geschwindigkeitssteuereinrichtung (18), der das Positionssignal (14) zugeführt wird und die derart eingerichtet ist, dass sie abhängig vom Positionssignal (14) die Entfernung des Fahrzeugs zur nächstliegenden Ortsgrenze oder einem Bereich mit Geschwindigkeitsbegrenzung in Fahrtrichtung des Fahrzeugs anhand von Daten der Navigationsdatenbank (16) ermittelt und abhängig von der ermittelten Entfernung ein Geschwindigkeitsstellsignal (20) erzeugt, das die aktuelle Geschwindigkeit des Fahrzeugs derart verringert, dass eine vorgegebene Geschwindigkeit des Fahrzeugs spätestens an der nächstliegenden Ortsgrenze bzw. dem oder Bereich mit Geschwindigkeitsbegrenzung erreicht wird.

## Beschreibung

Die Erfindung betrifft eine Vorrichtung zur automatischen Geschwindigkeitsregelung eines Fahrzeugs nach Anspruch 1 und ein entsprechendes Verfahren nach Anspruch 8.

Mit einer automatischen Geschwindigkeitsregelung in einem Fahrzeug wie beispielsweise einem Personenkraftwagen (PKW), auch als "Cruise Control" bezeichnet, kann eine Wunschgeschwindigkeit des Fahrzeugs eingestellt werden, die dann von der "Cruise Control" automatisch eingehalten wird. Eine Weiterentwicklung der herkömmlichen "Cruise Control" stellt die sogenannte "Adaptive Cruise Control" dar, die bei der automatischen Einstellung der Geschwindigkeit auch die Geschwindigkeit vorausfahrender Fahrzeuge beachtet und dementsprechend die Eigengeschwindigkeit des Fahrzeugs einstellt. Details zur "Adaptive Cruise Control" sind dem Fachbuch "Sicherheits und Komfortsysteme - Funktion, Regelung und Komponenten", Bosch Kraftfahrzeugtechnik, 3. Auflage, Oktober 2004, zu entnehmen.

Aufgabe der vorliegenden Erfindung ist es nun, eine verbesserte Vorrichtung und ein verbessertes Verfahren zur automatischen Geschwindigkeitsregelung vorzuschlagen.

Diese Aufgabe wird durch eine Vorrichtung zur automatischen Geschwindigkeitsregelung eines Fahrzeugs mit den Merkmalen von Anspruch 1 und durch ein entsprechendes Verfahren mit den Merkmalen von Anspruch 8 gelöst. Weitere Ausgestaltungen der Erfindung ergeben sich aus den abhängigen Ansprüchen.

Ein wesentlicher Gedanke der Erfindung besteht darin, eine Geschwindigkeitsregelung mit einem Ortsbestimmungssensor und einer Navigationsdatenbank oder mehreren Navigationsdatenbanken zu koppeln und bei der Regelung der Geschwindigkeit eines Fahrzeugs zusätzlich die Daten des Ortsbestimmungssensors und der Navigationsdatenbank(en) zu berücksichtigen. Dadurch ist es möglich, eine Regelung der Fahrzeuggeschwindigkeit vorzunehmen, die wesentlich besser an Ortsbegebenheiten angepasst ist als eine herkömmliche Geschwindigkeitsregelung. Insbesondere ermöglicht die Erfindung eine zeit- und/oder energieoptimale Geschwindigkeitsregelung, da beispielsweise beim Einfahren in Ortschaften oder andere Bereich automatisch auf die dort zulässige Geschwindigkeit heruntergeregelt werden kann, und zwar aufgrund der Navigationsdaten bereits so frühzeitig vor einer Einfahrt in einer Ortschaft oder einen Bereich mit Geschwindigkeitsbegrenzung, dass das Fahrzeug auf die zulässige Geschwindigkeit ausrollen kann, ohne im Wesentlichen bremsen zu müssen.

Gemäß einer Ausführungsform der Erfindung ist eine Vorrichtung zur automatischen Geschwindigkeitsregelung eines Fahrzeugs vorgesehen, mit
- einem Ortsbestimmungssensor, der ausgebildet ist, ein Positionssignal mit der aktuellen Position des Fahrzeugs abzugeben,
- einer Navigationsdatenbank, in der die Positionen von Ortsgrenzen gespeichert sind, und
- einer Geschwindigkeitssteuereinrichtung, der das Positionssignal zugeführt wird und die derart eingerichtet ist, dass sie abhängig vom Positionssignal die Entfernung des Fahrzeugs zur nächstliegenden Ortsgrenze oder einem Bereich mit Geschwindigkeitsbegrenzung in Fahrtrichtung des Fahrzeugs anhand von Daten der Navigationsdatenbank ermittelt und abhängig von der ermittelten Entfernung ein Geschwindigkeitsstellsignal erzeugt, das die aktuelle Geschwindigkeit des Fahrzeugs derart verringert, dass eine vorgegebene Geschwindigkeit des Fahrzeugs spätestens an der nächstliegenden Ortsgrenze bzw. dem Bereich mit Geschwindigkeitsbegrenzung erreicht wird.

Diese Vorrichtung eignet sich insbesondere zur Integration in die eingangs erwähnte "Cruise Control" oder auch eine "Adaptive Cruise Control".

Typischerweise ist die vorgegebene Geschwindigkeit eine niedrigere Geschwindigkeit als die aktuelle Fahrzeuggeschwindigkeit, beispielsweise eine generell in Ortschaften zulässige Höchstgeschwindigkeit. Dadurch kann ein Fahrzeug vor allem energieeffizient gefahren werden, da Situationen vermieden werden können, in denen das Fahrzeug beispielsweise mit der in der Regel auf Landstraßen zulässigen wesentlichen höheren Geschwindigkeit bis kurz vor einer Ortsgrenze fährt und dann stark auf die zulässige Geschwindigkeit in der Ortschaft heruntergebremst werden muss. Dies kann auch zu einer sicheren Fahrzeugführung beitragen, da ein Fahrzeugführer aktiv beim Einhalten zulässiger Höchstgeschwindigkeiten unterstützt wird. Diese Ausführungsform der Erfindung ist vor allem bei Verwendung einer handelsüblichen Navigationsdatenbank relativ kostengünstig implementierbar.

In der Navigationsdatenbank können gemäß einer Ausführungsform der Erfindung zulässige Geschwindigkeiten in Ortschaften gespeichert sein und die Geschwindigkeitssteuereinrichtung kann ferner derart ausgebildet sein, zur ermittelten nächstliegenden Ortsgrenze in Fahrtrichtung eine zulässige Geschwindigkeit in der entsprechenden Ortschaft als vorgegebene Geschwindigkeit zu verwenden. Dies ist insbesondere in Gegenden von Vorteil, in denen in Ortschaften häufig unterschiedliche Ortsgeschwindigkeiten zulässig sind, beispielsweise in einigen Orten 50 km/h, in anderen dagegen nur 30 km/h.

Weiterhin können gemäß einer Ausführungsform der Erfindung in der Navigationsdatenbank Höhenprofile von Straßen gespeichert sein, oder ein einer zweiten Navigationsdatenbank ein digitales Geländemodel abgelegt sein, welches zusammen mit der ersten Navigationsdatenbank verwendet wird, um das Höhenprofil der Straße zu ermitteln, und die Geschwindigkeitssteuereinrichtung kann ferner derart eingerichtet sein, bei der Erzeugung des Geschwindigkeitsstellsignals das Höhenprofil der Straße zu berücksichtigen, auf der momentan das Fahrzeug fährt. Dies erlaubt eine noch exaktere Geschwindigkeitsregelung.

Gemäß einer Ausführungsform der Erfindung kann die Geschwindigkeitssteuereinrichtung ferner derart eingerichtet sein, abhängig von der ermittelten Entfernung einen optimalen Ort zu bestimmen, an dem mit der Verringerung der aktuellen Geschwindigkeit des Fahrzeugs begonnen wird. Beispielsweise kann festgelegt werden, erst ab einer vorgegebenen Mindestentfernung vor einer Ortsgrenze oder dem Bereich mit Geschwindigkeitsbegrenzung mit der Verringerung der Geschwindigkeit begonnen wird.

Gemäß einer Ausführungsform der Erfindung kann die Geschwindigkeitssteuereinrichtung ferner derart eingerichtet sein, den optimalen Ort hinsichtlich einer Optimierung der zum Erreichen der Ortsgrenze bzw. dem Bereich mit Geschwindigkeitsbegrenzung benötigten Zeit zu bestimmen. In diesem Fall kann beispielsweise automatisch berechnet werden, dass ab dem optimalen Ort im Wesentlichen ohne weiteres Gasgeben und damit Kraftstoffverbrauch das Fahrzeug nur durch Ausrollen mit der vorgegebenen Geschwindigkeit an der Ortsgrenze bzw. dem Bereich mit Geschwindigkeitsbegrenzung ankommt.

Weiterhin kann die Geschwindigkeitssteuereinrichtung gemäß einer Ausführungsform der Erfindung ferner derart eingerichtet ist, den optimalen Ort hinsichtlich einer Optimierung der zum Erreichen der Ortsgrenze bzw. dem Bereich mit Geschwindigkeitsbegrenzung benötigten Energie zu bestimmen. Beispielsweise kann der optimale Ort derart gewählt werden, dass das Fahrzeug so nahe wie möglich an die Ortsgrenze bzw. den Bereich mit Geschwindigkeitsbegrenzung heranfährt und dann entsprechend abgebremst wird, um die vorgegebene Geschwindigkeit zu erreichen.

Gemäß einer weiteren Ausführungsform der Erfindung ist ein Verfahren zur automatischen Geschwindigkeitsregelung eines Fahrzeugs vorgesehen, bei dem ein Positionssignal mit der aktuellen Position des Fahrzeugs ausgegeben wird, und abhängig vom Positionssignal die Entfernung des Fahrzeugs zur nächstliegenden Ortsgrenze oder einem Bereich mit Geschwindigkeitsbegrenzung in Fahrtrichtung des Fahrzeugs anhand von Daten einer Navigationsdatenbank ermittelt und abhängig von der ermittelten Entfernung ein Geschwindigkeitsstellsignal erzeugt wird, das die aktuelle Geschwindigkeit des Fahrzeugs derart verringert, dass eine vorgegebene Geschwindigkeit des Fahrzeugs spätestens an der nächstliegenden Ortsgrenze bzw. dem Bereich mit Geschwindigkeitsbegrenzung erreicht wird.

In der Navigationsdatenbank können ferner zulässige Geschwindigkeiten in Ortschaften gespeichert sein und zur ermittelten nächstliegenden Ortsgrenze in Fahrtrichtung kann eine zulässige Geschwindigkeit in der entsprechenden Ortschaft als vorgegebene Geschwindigkeit verwendet werden.

Weiterhin können in der Navigationsdatenbank ferner Höhenprofile von Straßen gespeichert sein und bei der Verringerung der aktuellen Geschwindigkeit des Fahrzeugs kann das Höhenprofil der Straße zu berücksichtigt werden, auf der momentan das Fahrzeug fährt.

Abhängig von der ermittelten Entfernung kann zudem ein optimaler Ort bestimmt werden, an dem mit der Verringerung der aktuellen Geschwindigkeit des Fahrzeugs begonnen wird. Der optimale Ort kann beispielsweise hinsichtlich einer Optimierung der zum Erreichen der Ortsgrenze bzw. dem Bereich benötigten Zeit bestimmt werden. Alternativ kann der optimale Ort auch hinsichtlich einer Optimierung der zum Erreichen der Ortsgrenze bzw. dem Bereich benötigten Energie bestimmt werden.

Ferner betrifft die Erfindung gemäß einer weiteren Ausführungsform ein Computerprogramm zur Durchführung eines Verfahrens nach der Erfindung, wenn das Computerprogramm auf einem Computer durchgeführt wird.

Weiterhin ist gemäß einer Ausführungsform der Erfindung ein Datenträger vorgesehen, auf dem das Computerprogramm nach der Erfindung gespeichert ist.

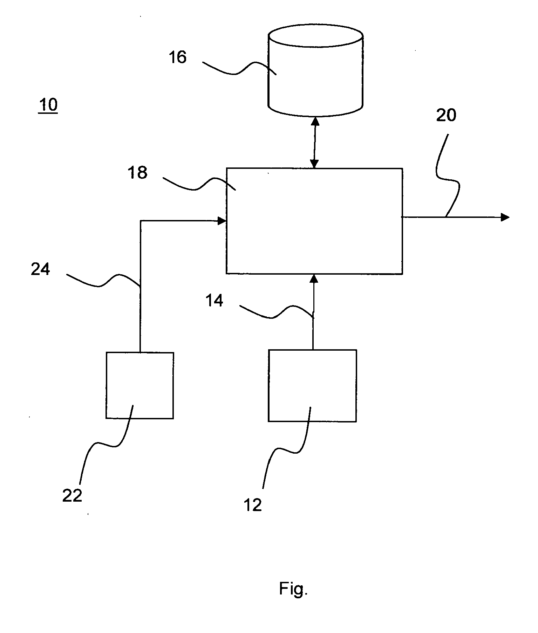

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel.

In der Beschreibung, in den Ansprüchen, in der Zusammenfassung und in der Zeichnung werden die in der hinten angeführten. Liste der Bezugszeichen verwendeten Begriffe und zugeordneten Bezugszeichen verwendet.

Die einzige Zeichnung zeigt in der Fig. ein Blockschaltbild eines Ausführungsbeispiels der Vorrichtung zur automatischen Geschwindigkeitsregelung eines Fahrzeugs gemäß der Erfindung.

Die dargestellte Vorrichtung 10 umfasst als zentrale Einheit eine Geschwindigkeitssteuereinrichtung 18, die ein Geschwindigkeitsstellsignal 20 an ein Steuergerät im Fahrzeug abgeben kann, das für die Steuerung der Fahrzeuggeschwindigkeit zuständig ist, beispielsweise ein Motorsteuergerät mit elektronischer Momentensteuerung, eine elektronische Getriebesteuerung oder ein elektronisches Bremssteuergerät. Das von der Geschwindigkeitssteuereinrichtung 18 erzeugte Geschwindigkeitsstellsignal 20 kann insbesondere in ein Fahrzeugbussystem eingespeist werden, an das auch die zu steuernden Steuergeräte zur Beeinflussung der Fahrzeuggeschwindigkeit angeschlossen sind.

Die Geschwindigkeitssteuereinrichtung 18 erhält zum Erzeugen des Geschwindigkeitsstellsignals 20 mehrere unterschiedliche Eingangssignale und -informationen, die von ihr insbesondere mit einem Berechnungsalgorithmus für eine optimierte Geschwindigkeitssteuerung verarbeitet werden, um daraus das Geschwindigkeitsstellsignal 20 zu erzeugen. Hierzu ist die Geschwindigkeitssteuereinrichtung 18 als Computer ausgebildet, der zum Verarbeiten der zugeführten Signale und Informationen wie im Folgenden noch genauer beschrieben eingerichtet ist.

Als weitere wesentliche Komponenten der Vorrichtung 10 sind ferner vorgesehen:

Ein Ortsbestimmungssensor 12, beispielsweise ein Satellitenortungssystem wie GPS (Global Positioning System) oder das zukünftige europäische Satellitennavigationssystem, erzeugt kontinuierlich ein Positionssignal 14, das der Geschwindigkeitssteuereinrichtung 18 zugeführt wird und die aktuelle Fahrzeugposition signalisiert.

Eine Geschwindigkeitseinstelleinrichtung 22 zum manuellen Einstellen einer Wunschgeschwindigkeit erzeugt ein Zielgeschwindigkeitssignal 24, das dazu dient, eine vom Fahrzeugführer eingestellte Wunschgeschwindigkeit des Fahrzeugs möglichst konstant einzustellen.

Weiterhin ist mit der Geschwindigkeitssteuereinrichtung 18 noch eine Navigationsdatenbank 16 verbunden, in der die Positionen von Ortsgrenzen und anderen Bereichen mit Geschwindigkeitsbegrenzungen gespeichert sind. Die Navigationsdatenbank 16 kann insbesondere die Datenbank eines herkömmlichen marktüblichen Navigationssystems sein, wie es heute von vielen Herstellern angeboten wird.

Im Betrieb wird in der Regel durch die Geschwindigkeitseinstelleinrichtung 22 manuell eine Wunschgeschwindigkeit vom Fahrzeugführer eingestellt, beispielsweise bei einer Fahrt auf einer Landstraße zwischen zwei Ortschaften die maximal zulässige Geschwindigkeit. Diese Wunschgeschwindigkeit wird dann als Zielgeschwindigkeitssignal 24 an die die Geschwindigkeitssteuereinrichtung 18 weitergegeben, die das Geschwindigkeitsstellsignal 20 daraufhin derart einstellt, dass die gewünschte Geschwindigkeit vom Fahrzeug erreicht wird.

Die Geschwindigkeitssteuereinrichtung 18 erhält ferner fortlaufend vom Ortsbestimmungssensor 12 das Positionssignal 14, das die aktuelle Position des Fahrzeugs angibt. Auf Basis der aktuellen mit dem Positionssignal 14 übermittelten Fahrzeugposition lädt die Geschwindigkeitssteuereinrichtung 18 aus der Navigationsdatenbank 16 Navigationsdaten zur Fahrzeugposition. Die Navigationsdaten umfassen hierbei vor allem die Positionen von Ortsgrenzen und anderen Bereichen mit einer Geschwindigkeitsbegrenzung. Die Geschwindigkeitssteuereinrichtung 18 ermittelt nun die Entfernung der aktuellen Fahrzeugposition vom nächsten Bereich mit Geschwindigkeitsbegrenzung in Fahrtrichtung, also beispielsweise die Entfernung zur nächsten Ortsgrenze vom Ort, der voraussichtlich vom Fahrzeug als nächstes Ziel erreicht wird. Anhand der derart berechneten Entfernung und der aktuellen Fahrzeuggeschwindigkeit errechnet die Geschwindigkeitssteuereinrichtung 18, wie die Fahrzeuggeschwindigkeit bei der Fahrt zur Ortsgrenze geregelt werden soll. Hierbei können nun zwei Voreinstellungen vorgegeben sein: energie- oder zeitoptimale Geschwindigkeitsregelung. In beiden Fällen wird der Ort errechnet, ab dem die Geschwindigkeit automatisch verringert werden muss, um bei Erreichen der Ortsgrenze mit der zulässigen Ortsgeschwindigkeit zu fahren. Mit anderen Worten wird also automatisch die Fahrzeuggeschwindigkeit ab einer bestimmten errechnet Fahrzeugposition verringert, bis die zulässige Ortsgeschwindigkeit möglichst genau an der Ortsgrenze erreicht ist. In die automatische Verringerung der Geschwindigkeit können weitere Parameter einfließen, wie beispielsweise das Höhenprofil der Straße. Diese Parameter können ebenfalls aus der Navigationsdatenbank 16 geladen werden, sofern sie dort gespeichert sind.

Durch die Erfindung wird insbesondere vermieden, dass bei einer Geschwindigkeitsregelung "Cruise Control" ein Fahrzeug bei Erreichen eines Bereichs mit Geschwindigkeitsbegrenzung abgebremst werden muss, was energetisch ungünstig ist. Vielmehr ermöglicht die Erfindung eine kraftstoffsparende automatische Regelung der Geschwindigkeit eines Fahrzeugs abhängig von zulässigen Geschwindigkeiten in bestimmten Bereichen wie Ortschaften oder dergleichen.

### Bezugszeichen

- 10: Vorrichtung zur automatischen Geschwindigkeitsregelung eines Fahrzeugs
- 12: Ortsbestimmungssensor
- 14: Positionssignal
- 16: Navigationsdatenbank
- 18: Geschwindigkeitssteuereinrichtung
- 20: Geschwindigkeitsstellsignal
- 22: Geschwindigkeitseinstelleinrichtung
- 24: Zielgeschwindigkeitssignal

## Patentansprüche

1. Vorrichtung (10) zur automatischen Geschwindigkeitsregelung eines Fahrzeugs mit
- einem Ortsbestimmungssensor (12), der ausgebildet ist, ein Positionssignal (14) mit der aktuellen Position des Fahrzeugs abzugeben,
- einer Navigationsdatenbank (16), in der die Positionen von Ortsgrenzen gespeichert sind, und
- einer Geschwindigkeitssteuereinrichtung (18), der das Positionssignal (14) zugeführt wird und die derart eingerichtet ist, dass sie abhängig vom Positionssignal (14) die Entfernung des Fahrzeugs zur nächstliegenden Ortsgrenze oder einem Bereich mit Geschwindigkeitsbegrenzung in Fahrtrichtung des Fahrzeugs anhand von Daten der Navigationsdatenbank (16) ermittelt und abhängig von der ermittelten Entfernung ein Geschwindigkeitsstellsignal (20) erzeugt, das die aktuelle Geschwindigkeit des Fahrzeugs derart verringert, dass eine vorgegebene Geschwindigkeit des Fahrzeugs spätestens an der nächstliegenden Ortsgrenze bzw. dem nächstliegenden Bereich mit Geschwindigkeitsbegrenzung erreicht wird.

2. Vorrichtung nach Anspruch 1,
**dadurch gekennzeichnet, dass**
in der Navigationsdatenbank (16) ferner zulässige Geschwindigkeiten in Ortschaften gespeichert sind und
die Geschwindigkeitssteuereinrichtung (18) ferner derart ausgebildet ist, zur ermittelten nächstliegenden Ortsgrenze in Fahrtrichtung eine zulässige Geschwindigkeit in der entsprechenden Ortschaft als vorgegebene Geschwindigkeit zu verwenden.

3. Vorrichtung nach Anspruch 1 oder 2,
**dadurch gekennzeichnet, dass**
in der Navigationsdatenbank (16) ferner Höhenprofile von Straßen gespeichert sind und die Geschwindigkeitssteuereinrichtung (18) ferner derart eingerichtet ist, bei der Erzeugung des Geschwindigkeitsstellsignals (20) das Höhenprofil der Straße zu berücksichtigen, auf der momentan das Fahrzeug fährt.

4. Vorrichtung nach Anspruch 1 oder 2,
**dadurch gekennzeichnet, dass**
in einer zweiten Navigationsdatenbank ein digitales Geländemodell gespeichert ist und die beiden Navigationsdatenbanken verwendet werden um das Höhenprofile von Straßen zu ermitteln und die Geschwindigkeitssteuereinrichtung (18) ferner derart eingerichtet ist, bei der Erzeugung des Geschwindigkeitsstellsignals (20) das Höhenprofil der Straße zu berücksichtigen, auf der momentan das Fahrzeug fährt.

5. Vorrichtung nach einem der Ansprüche 1 bis 4,
**dadurch gekennzeichnet, dass**
die Geschwindigkeitssteuereinrichtung (18) ferner derart eingerichtet ist, abhängig von der ermittelten Entfernung einen optimalen Ort zu bestimmen, an dem mit der Verringerung der aktuellen Geschwindigkeit des Fahrzeugs begonnen wird.

6. Vorrichtung nach Anspruch 5,
**dadurch gekennzeichnet, dass**
die Geschwindigkeitssteuereinrichtung (18) ferner derart eingerichtet ist, den optimalen Ort hinsichtlich einer Optimierung der zum Erreichen der Ortsgrenze bzw. des Bereichs benötigten Zeit zu bestimmen.

7. Vorrichtung nach Anspruch 5 oder 6,
**dadurch gekennzeichnet, dass**
die Geschwindigkeitssteuereinrichtung (18) ferner derart eingerichtet ist, den optimalen Ort hinsichtlich einer Optimierung der zum Erreichen der Ortsgrenze bzw. des Bereichs benötigten Energie zu bestimmen.

8. Verfahren zur automatischen Geschwindigkeitsregelung eines Fahrzeugs, bei dem ein Positionssignal (18) mit der aktuellen Position des Fahrzeugs ausgegeben wird, und
abhängig vom Positionssignal (18) die Entfernung des Fahrzeugs zur nächstliegenden Ortsgrenze oder einem Bereich mit Geschwindigkeitsbegrenzung in Fahrtrichtung des Fahrzeugs anhand von Daten einer Navigationsdatenbank (16) ermittelt und abhängig von der ermittelten Entfernung ein Geschwindigkeitsstellsignal (24) erzeugt wird, das die aktuelle Geschwindigkeit des Fahrzeugs derart verringert, dass eine vorgegebene Geschwindigkeit des Fahrzeugs spätestens an der nächstliegenden Ortsgrenze bzw. dem nächstliegenden Bereich oder einem Bereich mit Geschwindigkeitsbegrenzung erreicht wird.

9. Verfahren nach Anspruch 8,
**dadurch gekennzeichnet, dass**
in der Navigationsdatenbank (16) ferner zulässige Geschwindigkeiten in Ortschaften gespeichert sind und zur ermittelten nächstliegenden Ortsgrenze in Fahrtrichtung eine zulässige Geschwindigkeit in der entsprechenden Ortschaft als vorgegebene Geschwindigkeit verwendet wird.

10. Verfahren nach Anspruch 8 oder 9,
**dadurch gekennzeichnet, dass**
in der Navigationsdatenbank (16) ferner Höhenprofile von Straßen gespeichert sind und bei der Verringerung der aktuellen Geschwindigkeit des Fahrzeugs das Höhenprofile der Straße zu berücksichtigen, auf der momentan das Fahrzeug fährt.

11. Verfahren nach einem der Ansprüche 8 bis 10,
**dadurch gekennzeichnet, dass**
abhängig von der ermittelten Entfernung ein optimaler Ort bestimmt wird, an dem mit der Verringerung der aktuellen Geschwindigkeit des Fahrzeugs begonnen wird.

12. Verfahren nach Anspruch 11,
**dadurch gekennzeichnet, dass**
der optimale Ort hinsichtlich einer Optimierung der zum Erreichen der Ortsgrenze bzw. des Bereichs benötigten Zeit bestimmt wird.

13. Verfahren nach Anspruch 11 oder 12,
**dadurch gekennzeichnet, dass**
der optimale Ort hinsichtlich einer Optimierung der zum Erreichen der Ortsgrenze bzw. des Bereichs benötigten Energie bestimmt wird.

14. Computerprogramm zur Durchführung eines Verfahrens nach einem der Ansprüche 8 bis 13, wenn das Computerprogramm auf einem Computer durchgeführt wird.

15. Datenträger, auf dem das Computerprogramm nach Anspruch 14 gespeichert ist.
